(19) Europäisches Patentamt / European Patent Office / Office européen des brevets

(11) **EP 4 271 201 B1**

(12) **EUROPEAN PATENT SPECIFICATION**

(45) Date of publication and mention
of the grant of the patent:
**04.12.2024 Bulletin 2024/49**

(21) Application number: **21835794.5**

(22) Date of filing: **29.12.2021**

(51) International Patent Classification (IPC):
**A23J 3/22** *(2006.01)*    **A23J 3/14** *(2006.01)*
**A23J 3/16** *(2006.01)*

(52) Cooperative Patent Classification (CPC):
**A23J 3/14; A23J 3/16; A23J 3/227**

(86) International application number:
**PCT/EP2021/087766**

(87) International publication number:
**WO 2022/144376 (07.07.2022 Gazette 2022/27)**

(54) **MEAT ANALOGUE AND PROCESS FOR PRODUCING THE SAME**

FLEISCHANALOGON UND VERFAHREN ZUR HERSTELLUNG DESSELBEN

ANALOGUE DE VIANDE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2020 EP 20217758**

(43) Date of publication of application:
**08.11.2023 Bulletin 2023/45**

(73) Proprietor: **Unilever IP Holdings B.V.
3013 AL Rotterdam (NL)**

(72) Inventors:
• **DRIESSE, Marianne
6708 WH Wageningen (NL)**
• **PIJPERS, Shar Margriet
6708 WH Wageningen (NL)**

(74) Representative: **Tjon, Hon Kong Guno
Unilever Patent Group
Bronland 14
6708 WH Wageningen (NL)**

(56) References cited:
**EP-A2- 0 296 963      WO-A1-2020/089445
US-A1- 2008 260 913    US-A1- 2017 105 438**

**Description**

Field of the invention

The present invention relates to the field of meat analogues, in particular uncooked meat analogue products which have not been heated to more than 60°C before packaging.

Background of the invention

Meat is a cornerstone of meals in most countries in the developed world. Many meals are centered around a piece or pieces of meat as main course, for example: beef (steak, entrecote), pork (cutlet,) chicken (leg, breast). Minced meat of different animals are offered in the form of burgers, sausages, meat balls etc. Meat or pieces thereof can be breaded or battered and fried like schnitzel, nuggets, chicken wings etc. However, there is growing trend amongst consumers to replace meat with so-called meat analogues at least for a part of the week, so called flexitarians. It appears that the general public coming from a habit of eating meat is looking for meat-free alternative to replace the real-meat equivalent. US 2008/260913 A1 discloses an animal meat composition, the composition comprising an amount of animal meat, a colored structured protein product and a pH regulator, wherein the colored structured protein product comprises: a. from about 35% to about 65% soy protein on a dry matter basis; b. from about 20% to about 30% wheat gluten on a dry matter basis; c. from about 10% to about 15% wheat starch on a dry matter basis; and d. from about 1% to about 5% fiber on a dry matter basis. EP 0 296 963 A2 discloses a meat-like product comprising a gluten composition having a fibrous structure and possessing binding properties in combination with a nutritionally effective amount of a coloring agent, a spice providing a meat-like taste and a fat, wherein said gluten with a fibrous structure and possessing binding properties which product is obtainable by : (a) agitating wheat gluten with ascorbic acid in the presence of a solution of an edible acid at a pH in the range of between 4.0 and 8.0 (preferably 5.0 to 7.0) and at a temperature below 70°C to produce a relaxed gluten in the form of a viscous liquid-like structure ; and (b) generating a stable fibrous structure by incorporating a textured vegetable protein into said relaxed gluten.
As can be seen by the meat analogues offered to consumers in supermarkets, most if not all meat analogues are indeed analogues to the real-meat counterparts: so meat-free burgers, sausages, meatballs, pieces of chicken, schnitzel etc. They are typically offered in chilled cabinets just like to their real-meat equivalents.
Much of the development work has been directed to creating meat analogues with the right structure, bite, juiciness, taste and appearance. Most meat analogue products are offered as cooked variants, i.e. with the cooked or grilled appearance of e.g. white chicken meat or grayish minced meat in burgers and sausage. Some meat-free burgers may even have a dark grill pattern giving the appearance of having been grilled. These meat analogues are usually actually cooked i.e. they are pasteurised or sterilised before packaging and can be consumed without a further cooking step by the consumer.
More recently, there has been a demand for raw meat analogues with the appearance of the fresh raw meat equivalent, e.g. for burgers the reddish colour of freshly prepared real minced meat. Such raw meat analogues are typically uncooked, i.e. not pasteurised or sterilised before packaging. To optimise the flavour and texture of raw meat analogues it is important that during the manufacturing process the temperature is kept below 20°C or even below 10°C.
However, without the pasteurisation or sterilisation step just before packaging, applicants have found that product stability has become more unpredictable. In particular taste and after taste of meat analogues deteriorates unexpectedly after production.

Summary of the invention

The inventive composition unexpectedly shows an improved product stability and in particular taste stability when consumed e.g. at least 2 wks storage at 7°C, preferably at least 28 days after storage at 7°C. Optionally, for the final 1/3 of the 28 days the meat analogue may also be stored at 12°C. Surprisingly, the present invention also provides pasteurised meat analogues with improved product stability.
The present invention provides a meat analogue comprising, by weight of the total composition, unless indicated otherwise,

    a) non-animal protein
    b) a binding agent, preferably comprising at least one ungelatinized gel forming agent,
    c) a food grade acid in the form of an edible organic acid, such that the level of undissociated acid is from 0.015 to 0.5wt%, preferably whereby said food grade acid comprises acetic acid, citric acid, lactic acid, malic acid and combinations thereof,
    d) preferably 0.01 to 5 wt% of NaCl, more preferably 0.05 to 3 wt% of NaCl more preferably 0.1 to 2 wt% of NaCl, more preferably 0.3 to 1.7wt%, more preferably 0.5 to 1.7wt%, more preferably 1.1 to 1.5 wt% NaCl

Whereby said meat analogue has a

i) pH from 4.7 to 6.0 and preferably 5.1-5.9, more preferably 5.2 to 5.6
ii) water activity (Aw) from 0.96 to 1, more preferably 0.97 to 1
iii) a moisture content of from 45 to 69 wt% more preferably 56 to 65 wt % even more preferably 60 to 65wt %

Whereby the meat analogue contains no egg white protein.
Optionally whereby said meat analogue is packaged, preferably under a modified atmosphere.
Preferably the meat analogue comprises, by weight of the total composition, unless indicated otherwise,

a) non-animal protein
b) a binding agent, preferably comprising at least one ungelatinized gel forming agent,
c) a food grade acid in the form of an edible organic acid, such that the level of undissociated acid is from 0.075 to 0.2wt %, more preferably from 0.080 to 0.15 wt%, even more preferably from 0.080 to 0.13 wt %, preferably whereby said food grade acid comprises acetic acid, citric acid, lactic acid, malic acid and combinations thereof,
d) an amount of NaCl is from 0.5 to 1.7wt%, more preferably 1.1 to 1.5 wt% NaCl Whereby said meat analogue has a

i) pH from 5.1-5.9, more preferably 5.2 to 5.6
ii) water activity (Aw) from 0.96 to 1, more preferably 0.97 to 1
iii) a moisture content of from 56 to 65 wt % even more preferably 60 to 65wt % Whereby the meat analogue contains no egg white protein.

Optionally whereby said meat analogue is packaged, preferably under a modified atmosphere.
The invention further provides a minced meat analogue in the form of a burger or sausage, according to the claims, comprising, in wt% by weight of the total composition:

a) non-animal protein present as 40 to 60 wt% of hydrated textured vegetable protein particles resulting in the meat analogue having 7 to 24 wt% of plant protein by weight of the total composition
b) a binding agent, preferably comprising at least one ungelatinized gel forming agent,
c) acetic acid, citric acid, malic acid and combinations thereof
d) an undissociated acetic acid level from 0.080 to 0.13 wt %
e) 0.5 to 1.7wt%, more preferably 1.1 to 1.5 wt% NaCl
f) 8 to 20 wt% of lipid

Whereby said meat analogue has a

i. pH from 5.2 to 5.6
ii. Aw 0.97 to 1
iii. a moisture content of from 56 to 65 wt % even more preferably 60 to 65wt %

Whereby the meat analogue contains no egg white protein, preferably no animal protein,
Whereby the meat analogue is packaged under modified atmosphere

The invention further provides a process for preparing a meat analogue according to the invention whereby textured protein (TP) provides at least part of the non-animal protein comprising the steps of

a) Hydrating dry TP particles to obtain hydrated TP
b) Optionally grinding part of the hydrated TP into strands having a length of 1-2 cm
c) Optionally mixing the ground TP with the remaining unground hydrated TVP
d) Admixing the remainder of the ingredients to obtain the meat analogue mixture
e) Optionally forming the meat analogue mixture into the final form of the meat analogue like a burger, sausage or meat ball.
f) Optionally packaging the meat analogue, preferably under a modified atmosphere.

Whereby the during the process the temperature of the mixture and meat analogue is kept below 20°C, preferably below 15°C, more preferably below 10°C

## Detailed description of the Invention

Unexpectedly, the present invention provides a meat analogue wherein the meat has an acceptable taste after 14 days, preferably 28 days storage at 7°C when compared to the same but stored for 1 day at 7°C calculated from the production date of the meat analogue.

## Definitions

The term "meat analogue" is understood to refer to food product resembling a real-meat product whereby at least 90wt% of the protein is of non-animal origin. Preferably, a meat analogue is substantially free of egg white protein and dairy protein. Even more preferably a meat analogue is substantially free of animal protein. Even more preferably a meat analogue is substantially free of animal fat. Even more preferably a meat analogue comprises less than 0.1wt% of ingredients derived from animals, more preferably less than 0.01wt%. Preferably the meat analogue according to the invention is free from heme-containing protein. Substantially free as used herein that such ingredients are not added as such for a specific functionality but can be present in trace amounts as part of a non-animal derived ingredient.

The term "minced meat analogue" as used herein refers to a vegetarian product that has an appearance and structure similar to that of minced meat. More particularly, like minced meat, the minced meat analogue of the present invention is largely ($\geq$ 40 wt.%) composed of small pieces of elastic hydrated material that are wetted on the outside by an aqueous liquid. The term "minced meat analogue" also encompasses products shaped from such minced meat analogue, such as patties, sausages and meat balls.

The undissociated acid for a specific food grade acid is described e.g. as "undissociated acetic acid", "undissociated lactic acid", "undissociated malic acid", "undissociated citric acid" etc. The term "undissociated acid" or [A-] is understood to refer to the sum of undissociated acids of the respective food grade acids present in the meat analogue.

The concentration of undissociated acid of a given acid [Ax-] in wt% by weight of the total meat analogue composition can be calculated using the amount of moisture and pH of the meat analogue, where the pKa and amount of said acid in wt% are known:

$$[A^x\text{-}] = (1-(1/(1+10^\wedge(pKa^x\text{-}pH))))*100*([A^xH]/10000)/[\text{moisture content (wt\%)}]$$

Whereby

| | |
|---|---|
| $[A^x]$ | = the amount of undissociated acid for food grade acid x (wt%) |
| $pKa^x$ | = the pKa for food grade acid x |
| $A^xH$ | = wt% of food grade acid x |
| Moisture content | = the moisture content in wt% of total weight the meat analogue. |
| pH | = the average equilibrium pH of the meat analogue. The average pH of the meat analogue refers to the pH as measured after homogenising the meat analogue and applying the pH probe directly to the sample according to ISO2917. |

The term "moisture content" as used herein refers to the amount of moisture in a material as measured in an analytical method calculated as percentage change in mass following the evaporation of water from a sample. Moisture content measurement is routineously carried out by commercial laboratories like Eurofins in Europe. One preferred test method is moisture content measurement according to ISO 1442 at 103°C.

It is noted that the amount of moisture is not necessarily the same as the amount of water added during production if ingredients are used that already contain some moisture such as starch or liquid beet juice. It also noted that the amount of moisture includes the moisture in e.g. hydrated textured vegetable protein particles. For example, a meat analogue may contain 60 wt% of moisture and 50 wt% of hydrated textured vegetable protein particles as half of the 60 wt% moisture may be part of the hydrated textured vegetable protein particles. The term "water activity" [Aw] is understood to refer to the amount of free water in a sample. Water activity is a thermodynamic measure of water expressed as the vapor pressure of water in a sample divided by vapor pressure of pure water at a given temperature. Water activity is routinely measured by commercial analytical labs like Normec Foodcare in Europe. One preferred method is ISO 21807.

The term "mouth feel" as used herein refers to the overall appeal of a food product, which stems from the combination of characteristics such as aroma, moistness, chewiness, bite force, degradation, and fattiness that together provide a satisfactory sensory experience. The term "native" as used herein refers to what is natural (i.e., found in nature). For example, a protein that is native to a natural source is naturally produced by the natural source when the natural source is not intentionally modified by a human.

The term "non-animal" as used herein refers to a plant, algae, fungus, or microbe.

The terms "a" and "an" and "the" and similar referents as used herein refer to both the singular and the plural, unless otherwise indicated herein or clearly contradicted by context. The term "texturized protein" or TP as used herein refers to solid fibrous particles, which are produced by cooking the starting materials in an extruder cooker and extruding them to form a texturized protein.

The term "texturized vegetable protein" as used herein refers to TP based on plant protein such as soy protein, pea protein, sunflower protein, mung bean protein.

The term "protein concentrate" as used herein refers to material having at least 60 wt% protein based on dry matter. Soy protein concentrates are prepared by removing soluble carbohydrate fraction as well as some flavor compounds from defatted soy meal. TVP is often made from protein concentrates.

The term "protein isolate" as used herein refers to material having at least 90 wt% of protein based on dry matter. Examples include soy protein isolate, pea protein isolate and potato protein isolate.

Meat analogue

The meat analogue according to the invention is preferably an uncooked meat analogue. Here "uncooked" means that the complete meat analogue, i.e. the meat analogue as whole, has not been heated to temperatures in excess of 60°C. Ingredients of the meat analogue, such as the TVP pieces, dried herbs, vegetable extracts, dried and ground spices, oil etc., however, may have been heated to temperatures in excess of 60°C during the production thereof. Preferably, the meat analogue according to the invention is minced meat analogue. Preferably, the meat analogue according to the invention in the form of a burger, sausage, or meat ball. Preferably the meat analogue according to the invention has the appearance similar to a fresh raw real-meat equivalent product, like a raw real-meat burger, sausage or meat ball.

The meat analogue according to the invention preferably has a moisture content of 45 to 69 wt%, more preferably 56 to 65 wt%, more preferably 60 to 65 wt% by weight of the total composition. The meat analogue according to the invention preferably has a pH of from 4.7 to 6.0 and more preferably 5.1-5.9, more preferably 5.2 to 5.6.

The meat analogue according to the invention preferably has a water activity Aw of 0.95 to 1, more preferably 0.96 to 1, more preferably 0.97 to 1.

Non-animal protein

The meat analogue according to the invention preferably comprises 5 to 35 wt% of non-animal protein, more preferably 6 to 29 wt%, even more preferably 7 to 24 wt%, even more preferably 8 to 19 wt%, even more preferably 10 to 15 wt%. Preferably the non-animal protein is selected from plant protein, algal protein, fungal protein, or microbial protein. Plant protein is preferably selected from legume protein. In particular, the meat analogue according to the invention preferably comprises - at levels according to each of the ranges recited above- soy protein, pea protein, fungal protein, mung bean protein, algal protein, wheat protein, oat protein, lentil protein, faba bean protein, lupin protein and combination thereof.

Preferably, at least 70 wt%, more preferably at least 80 wt%, even more preferably at least 90 wt%, even more preferably at least 95 wt%, even more preferably at least 99 wt% of the total amount of protein of the meat analogue is plant protein selected from legume protein, wheat protein, rice protein and combinations thereof. Examples of legume proteins that can be used include soy protein, lentil protein, pea protein, faba bean protein, lupin protein and combinations thereof.

Texturized Protein (TP) and TVP

At least part of the non-animal protein may be present in the meat analogue in the form of a texturized protein (TP). Preferably, at least 90 wt% of the non-animal protein in the meat analogue according to the invention is in the form of TP.

Typically, TP particles are purchased as dry fibrous particles. TP particles are hydrated with sufficient hydration solution to obtain hydrated TP particles. When TP is made from plant protein, it is also referred to as textured vegetable protein (TVP). Preferred TVP is made from legume protein containing material, in particular from soy and pea sometimes in combination with wheat protein or oat protein. TVP particles can be obtained from suppliers like Roquette™, ADM™ and Solae™. Preferably the meat analogue according to the invention comprises 30 to 70 wt% of hydrated TP particles, more preferably 40 to 65 wt% by weight of the total composition. Preferably the meat analogue according to the invention comprises 30 to 70 wt% of hydrated TVP particles, more preferably 40 to 65 wt% by weight of the total composition. Preferably the meat analogue according to the invention comprises 30 to 70 wt% of hydrated legume TVP particles, more preferably 40 to 65 wt% by weight of the total composition whereby the TVP particles comprise soy protein, pea protein and combinations thereof. Preferably, the meat analogue is free from spun protein fibers such as solution-spun protein fibers. These protein fibers are typically prepared from a spinning dope of protein which is forced through a porous membrane such as a spinneret to form fibers which are coagulated in an acid salt bath and oriented by suitable means, such as by a series of rolls revolving at increasing speeds like described in US 2682466 (Boyer) and US 3314356.

Food grade acid

The meat analogue according to the invention comprises a level of undissociated acid from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % even more preferably from 0.083 to 0.13 wt % by weight of the total composition. The amount of food grade acid to obtain a certain undissociated acid level for a given meat analogue composition can be calculated using the formula given above. The amount of food grade acid will depend on the desired pH, pKa of the selected food grade acid and moisture content of the meat analogue. For example, if the selected food grade acid is acetic acid, the pKa for acetic acid is 4.75. For a meat analogue with a desired pH of 5.45 a moisture content of 64,3% and undissociated acetic acid level of 0.083 wt%, the formula can be used to calculate the corresponding amount of acetic acid, i.e. 3200mg/kg acetic acid or 0.32 wt% acetic acid.

The food grade acid is an edible organic acid. Preferably the meat analogue according to the invention comprises a food grade acid such as acetic acid, citiric acid, lactic acid, malic acid, propanoic acid, adipic acid, tartaric acid, succinic acid and combinations thereof. Preferably, the food grade acid is selected from acetic acid, citiric acid, lactic acid, malic acid and combinations thereof. Preferably the meat analogue is substantially free of benzoic acid.

The meat analogue according to the invention comprises an amount of food grade acid such that the level of undissociated acid is from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % even more preferably from 0.083 to 0.13 wt % by weight of the total composition The meat analogue according to the invention preferably comprises an amount of food grade acetic acid such that the level of undissociated acetic acid is from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % even more preferably from 0.083 to 0.13 wt % by weight of the total composition.

The meat analogue according to the invention preferably comprises an amount of food grade acid of from 0.15 to 4 wt%, preferably from 0.20 to 2.5 wt%, more preferably from 0.25 to 1 wt % by weight of the total composition, preferably whereby the food grade acid is selected from acetic acid, citric acid, lactic acid, malic acid and combinations thereof such that the level of undissociated acid is from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % even more preferably from 0.083 to 0.13 wt % by weight of the total composition.

The meat analogue according to the invention preferably comprises an amount of food grade acid of from 0.15 to 2 wt%, preferably from 0.20 to 1.5 wt%, more preferably from 0.25 to 1 wt % by weight of the total composition, preferably whereby the food grade acid is selected from acetic acid, citric acid, lactic acid, malic acid and combinations thereof such that the level of undissociated acetic acid is from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % even more preferably from 0.083 to 0.13 wt % by weight of the total composition.

The amount of food grade acid can be determined by any suitable method and is routineously carried out by commercial laboratories including Eurofins and Nutrilab using HPLC. One preferred protocol is NEN-ISO-2917. A even more preferred protocol is NEN - ISO 17294 as carried out by Eurofins (NL), Merieux (NL) or Nutrilab (NL). The sample is generally ground, suspended and centrifuged. After filtration the sample may be analysed using HPLC with a UV-detector at 210 nm.

Binding agents

The meat analogue according to the invention preferably comprises a binding agent to bind other ingredients of the meat analogue, e.g., to bind textured vegetable protein particles. A suitable binding agent can be identified by titrating different binding agents against the cohesiveness and fracturability of the meat analogue. The binding agent preferably includes a gel forming agent. Preferably, the binding agent comprises a combination of gel forming plant protein, a gel forming polysaccharide and combinations thereof. The meat analogue according to the invention preferably comprises 0.1 to 25 wt% of binding agent, preferably 0.1 to 15 wt% more preferably 0.2 to 11 wt%, even more preferably 0.3 to 7 wt% by weight of the total composition. The binding agent preferably comprises the combination of 0.3 to 7 wt% of a gel forming plant protein and 0.1 to 5 wt% of a gel forming polysaccharide like methylcellulose.

Gel forming agent

The meat analogue according to the invention preferably comprises a ungelatinized gel forming agent, preferably in an amount of from 0.1 to 25 wt%, preferably 0.1 to 15 wt% more preferably 0.2 to 11 wt%, even more preferably 0.3 to 7 wt%, more preferably 0.1 to 9 wt%, more preferably 0.2 to 7 wt%, even more preferably 0.3 to 5 wt% even more preferably 0.5 to 5 wt% by weight of the total composition. The term "gel forming agent" as used herein refers to a compound which is able to form a gel at the concentration, pH and salt level used in the meat analogue when heat is applied, preferably to a temperature of at least 40°C, more preferably at least 45°C, even more preferably at least 50°C, even more preferably at least 60°C, even more preferably at least 70°C, even more preferably at least 80°C. Such gel forming agent may also be referred to as a "heat-inducible gel forming agent". Particularly preferred, is a heat-inducible gel forming agent which is able to form a gel a when heat is applied, preferably to a temperature at least 60°C whereby the heat-inducible gel forming agent comprises at least one protein. When heat is applied to a solution of a gel forming agent it forms a gel when subsequent to the heating it is cooled. The gel forming agent is thought to form a gel by creating a network of gel forming agents holding the water phase. The term "ungelatinized gel forming agent" as used herein refers to the gel forming agent when it is not a gel. This is the case when it has not been heated.

The term "gelatinized gel forming agent" as used herein refers to the gel forming agent when it is a gel after heating - as described above and subsequent cooling. Preferably, it is cooled to less than 60°C, more preferably less than 50°C, more preferably less than 40°C. One exception is methyl cellulose which forms gels when heated (typically to at least about 60°C) but a methylcellulose gel becomes liquid when cooled.

The gel forming agent is preferably present in the meat analogue as an ungelatinized gel forming agent. The advantage thereof is that the meat analogue gets firmer during cooking just like real meat thereby providing the consumer with an even better meat analogue experience.

The gel forming agent may be a non-animal protein isolate or non-animal protein concentrate or a non-animal polysaccharide. Preferably the non-animal gel forming agent is derived from a plant, algae, microbe. If the gel forming agent is a gel forming plant protein, preferred examples include but are not limited legume protein isolates like soy protein isolate, pea protein isolate, mung bean protein isolate and other plant proteins like potato protein, RuBisCo, moong 8S globulin, a pea globulin, a pea albumin, a lentil protein, zein, or an oleosin and combinations thereof. The meat analogue according to the invention preferably comprises a ungelatinized gel forming plant protein, preferably in an amount of from 0.1 to 25 wt%, preferably 0.1 to 15 wt%, more preferably 0.2 to 11 wt%, even more preferably 0.3 to 7 wt%, more preferably 0.1 to 9 wt%, more preferably 0.2 to 7 wt%, even more preferably 0.3 to 5 wt%, even more preferably 0.5 to 5 wt% by weight of the total composition. The meat analogue according to the invention preferably comprises an ungelatinized gel forming plant protein selected from potato protein, soy protein isolate, pea protein isolate, preferably in an amount of from 0.1 to 25 wt%, preferably 0.1 to 15 wt%, more preferably 0.2 to 11 wt%, even more preferably 0.3 to 7 wt%, more preferably 0.1 to 9 wt%, more preferably 0.2 to 7 wt%, even more preferably 0.3 to 5 wt%, even more preferably 0.5 to 5 wt% by weight of the total composition.

If the gel forming agent is a gel forming polysaccharide, preferred examples include but are not limited to carob bean gum, tara gum, cassia gum, gum arabic, konjac mannan gum, carrageenan, methylcellulose, xanthan gum, pectin, starch and combinations thereof. The meat analogue according to the invention preferably comprises an ungelatinized gel forming polysaccharide, preferably in an amount of from 0.1 to 5 wt% even more preferably 0.2 to 3 wt% by weight of the total composition. Preferably, the ungelatinized gel forming agent comprises a combination of 1 to 5 wt% methylcellulose and 0.5 to 7 wt% potato protein by weight of the total composition. Preferably, the meat analogue according to the invention is substantially free from carob bean gum, tara gum, cassia gum, gum arabic, konjac mannan gum, carrageenan, xanthan gum and combinations thereof, if such ingredients are undesired.

Fiber

The meat analogue according to the invention preferably comprises 0.1 to 9 wt% of fiber, more preferably 0.2 to 7 wt%, even more preferably 0.3 to 6 wt% by weight of the total composition. Preferred examples of suitable edible fiber include but are not limited to psyllium fiber, citrus fiber, potato fiber, bamboo fiber, barley bran, carrot fiber, corn bran, soluble dietary fiber, insoluble dietary fiber, pea fiber, rice bran, head husks, soy fiber, soy polysaccharide, wheat bran, wood pulp cellulose and combinations thereof. Preferably, the meat analogue according to the invention comprises 0.3 to 6 wt% of fiber selected from psyllium fiber, citrus fiber, potato fiber bamboo fiber and combinations thereof.

Lipid

The meat analogue according to the invention preferably comprises lipid. Preferably The term "lipid" as used herein refers to a glyceride component that contains at least 80 wt% of glycerides selected from triglycerides, diglycerides and combinations thereof. Any food grade lipid may be used. Lipid may be a liquid oil or a solid fat or preferably both. Preferably the lipid comprises both liquid oil droplets and solid fat particles.

The term "liquid oil" as used herein refers to an oil that contains no solid at 20°C (N20 = 0%). The solid fat content at 20°C can be determined using ISO method ISO 8292-2:2008.

The term "solid fat" as used herein refers to a fat that contains at least 20% solid fat at 20°C (N20 ≥20%).

Preferably, meat analogue according to the invention comprises 1 to 25 wt% of lipid, more preferably 5 to 22 wt%, even more preferably 8 to 20wt% by weight of the total composition.

Preferably, meat analogue according to the invention comprises 1 to 20 wt% of liquid oil, more preferably 2 to 15 wt%, even more preferably 3 to 10 wt% by weight of the total composition.

Preferably, meat analogue according to the invention comprises 1 to 20 wt% of solid fat, more preferably 2 to 15 wt%, even more preferably 3 to 10 wt% by weight of the total composition.

Preferably, meat analogue according to the invention comprises 1 to 25 wt% of lipid, more preferably 5 to 22 wt%, even more preferably 8 to 20wt% by weight of the total composition,

whereby the meat analogue comprises both liquid oil droplet and solid fat particles, preferably whereby the meat analogue comprises

- 1 to 20 wt% of liquid oil, more preferably 2 to 15 wt%, even more preferably 3 to 10 wt% in the form of liquid oil droplets, and
- 1 to 20 wt% of solid fat, more preferably 2 to 15 wt%, even more preferably 3 to 10 wt% in the form of solid fat particles,

Any food grade lipid may be used. Preferred liquid oils include one or more of vegetable oil, an algal oil, sunflower oil, corn oil, soybean oil, palm fruit oil, palm kernel oil, safflower oil, flaxseed oil, rice bran oil, cottonseed oil, olive oil, canola oil, coconut oil, and mango oil. Preferred solid fat particles include shea fat, coconut fat and palm fat. Preferably solid fat is added as flakes. Preferably the solid fat particles in the meat analogue have size from 0.2 to 10 mm, preferably 0.5 to 9 mm, more preferably from 2 to 8 mm. The term size in this context refers to the longest dimension of a solid fat particle measured from one end through the center to the other end of the particle.

Preferably, meat analogue according to the invention comprises 1 to 25 wt% of lipid comprising at least sunflower oil droplets and coconut fat particles.

If the lipid comprises both liquid oil droplets and solid fat particles, the liquid oil and solid fat are mixed as individual ingredients with the other ingredients of the meat analogue. If the solid fat is first melted and then mixed with liquid oil this will result in a new triglyceride composition which is either liquid or solid but not both.

Flavouring agent

The meat analogue according to the invention preferably comprises flavouring agent, preferably 0.1 to 20 wt% of flavouring agent, more preferably 0.5 to 10 wt%, even more preferably 1 to 10 wt% by weight of the total composition. Any food grade flavouring agent to provide the desired flavour may be used. Examples include, beef flavour, pork flavour, meat flavour, fish flavour, taste enhancer, yeast extract, spices, herbs, and combinations thereof.

Coloring agent

The meat analogue according to the invention preferably comprises coloring agent, preferably 0.01 to 10 wt% of colouring agent, more preferably 0.05 to 5 wt%, even more preferably 0.1 to 3 wt% by weight of the meat analogue. Any food grade coloring agent to provide the desired colour may be used. Preferred are non-animal derived coloring agents like extracts, juices, powders from red or orange coloured fruit, vegetable, root. Examples include beet, bell pepper, pomegranate, mandarin, carrot, barley malt and combinations thereof.

Salt

The meat analogue according to the invention preferably comprises NaCl, preferably from 0.01 to 5 wt% of NaCl, more preferably 0.05 to 3 wt% of NaCl more preferably 0.1 to 2 wt% of NaCl, more preferably 0.3 to 1.7wt%, more preferably 0.5 to 1.7wt%, more preferably 1.1 to 1.5 wt% by weight of the total composition. In addition, part of the NaCl may be replaced by KCl.

Preferably the meat analogue comprises by weight of the total composition unless indicated otherwise

a) non-animal protein
b) a binding agent comprising at least one ungelatinized gel forming agent,
c) food grade acid
d) a food grade acid in the form of an edible organic acid, such that the level of undissociated acid is from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt %, preferably whereby said food grade acid comprises acetic acid, citric acid, lactic acid, malic acid and combinations thereof,

e) preferably 0.01 to 5 wt% of NaCl, more preferably 0.05 to 3 wt% of NaCl more preferably 0.1 to 2 wt% of NaCl, more preferably 0.3 to 1.7wt%, more preferably 0.5 to 1.7wt%, more preferably 1.1 to 1.5 wt% NaCl

Whereby said meat analogue has a

i) pH from 4.7 to 6.0 and preferably 5.1-5.9, more preferably 5.2 to 5.6
ii) water activity (Aw) from 0.96 to 1, more preferably 0.97 to 1
iii) a moisture content of from 45 to 69 wt% more preferably 56 to 65 wt % even more preferably 60 to 65wt %

Whereby the meat analogue contains no egg white protein.
Optionally whereby said meat analogue is packaged, preferably under a modified atmosphere.

Process to prepare the meat analogue according to the invention

The invention further provides a process to prepare the meat analogue according to the invention whereby textured protein (TP) provides at least part of the non-animal protein comprising the steps of

a) Hydrating dry TP particles to obtain hydrated TP
b) Optionally grinding part of the hydrated TP into strands having a length of 1-2 cm
c) Optionally mixing the ground TP with the remaining unground hydrated TP
d) Admixing the remainder of the ingredients to obtain the meat analogue mixture
e) Optionally forming the meat analogue mixture into the final form of the meat analogue like a burger, sausage or meat ball.
f) Optionally packaging the meat analogue, preferably under a modified atmosphere.

Whereby the during the process the temperature of the mixture and meat analogue is kept below 20°C, preferably below 15°C, more preferably below 10°C.
The low temperature during processing enables the presence of non-gelatinised gel forming proteins in the packaged meat analogue. Such proteins only form gels when the meat analogue is cooked by the consumer such that during e.g. frying of a meat-free burger the gel forms making the burger firmer just like a real-meat burger.
The step a of hydrating the dry TP particles is preferably carried out under vacuum like in a vacuum tumbler. Preferably a sufficient amount of water is used to obtain hydrated TP particles. The amount of water needed can be routineously determined by a skilled person in the art. Often the supplier will provide this information. Typically, 2 to 3 or 4 liter of water is needed for 1 kg of TP. Preferably, at least part of the food grade acids and part of the coloring agents is used in the hydration fluid. Preferably the amount is calculated to obtain an even distribution of the food grade acids and coloring agent throughout the TP particles and the meat analogue. If different TP types are used these may be hydrated together or separately.
Optionally part of the TP may be comminuted, preferably by grinding and extruding through a plate with holes, preferably with a diameter of 6-10 mm.
If solid fat as well as liquid oil are used these two are admixed separately. For example, first the solid fat is admixed for e.g. 2 min and subsequently the liquid oil is admixed, or vice versa.
The meat analogue mixture may be formed into any desired shape such as hamburger patties with a diameter of about 8.6 cm and thickness of about 1.9 cm; meat balls. The meat analogue mixture may be extruded into suitable casing to form sausages. Alternatively, the meat analogue may be formed into strands and formed into a block of strands to resemble real minced meat. The meat analogue is preferably packaged. Preferably, it is packaged under a modified atmosphere. A modified atmosphere as used herein refers to an internal atmosphere in the packaging having a different composition than ambient atmosphere. Usually the modified atmosphere will have an oxygen concentration which is lower than ambient atmosphere like a ratio of $O_2 : N_2 : CO_2$ of 0 : 50 : 50. It is also possible to have more oxygen e.g. 70 $O_2$ : 30 $CO_2$. Preferably, the modified atmosphere is one from which oxygen is substantially depleted, or increased to more than 30vol%.

Cooking the meat analogue

The meat analogue may be cooked by the consumer using the usual methods like frying in pan or grilling the meat analogue e.g. using a barbeque for sufficient amount of time to result in a core temperature of at least 70°C for at least 2 minutes, 72°C for preferably at least 1 min, 85°C for at least 1 sec.
These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Ratios are weight/weight, unless indicated otherwise.

Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of

integers or steps. The reference in this specification to any prior publication (or information derived from it), or to any matter which is known, is not, and should not be taken as an acknowledgement or admission or any form of suggestion

that that prior publication (or information derived from it) or known matter forms part of the common general knowledge in the field of endeavour to which this specification relates.

The invention is further illustrated by the following non-limiting examples. It will be clear to the skilled person how to carry out the invention by using equivalent means without departing from the invention.

Examples

**Example 1** Minced meat meat analogue base composition

Meat analogues according the base composition in table 1 were prepared with varying levels of undissociated acid and salt. The amount of hydrated soy TVP particles and other ingredients resulted in a minced meat analogue having about 11.9 wt% plant protein by weight of the total minced meat analogue.

Table 1

| Ingredients | Wt.% |
| --- | --- |
| Hydrated soy TVP particles | 47 |
| Food grade acids of table 2 | See table 2 |
| NaCl | See table 2 |
| Soy protein isolate | 0.5 |
| Starch | 1.0 |
| Methylcellulose | 3.00 |
| Potato protein | 6.00 |
| Coloring agents (beetroot and barley malt) | 0.77 |
| Psyllium fiber, citrus fiber | 0.74 |
| Flavouring | 3.1 |
| Sunflower oil | 7.50 |
| Palmfat flakes | 6.00 |
| Water and minor ingredients | Balance to 100 wt% |

The ingredients were sourced in Europe and US.
The meat analogue base composition was prepared as follows:

a) Dry soy TVP particles were hydrated for 45-90 min in a vacuum tumbler at 0 - 7°C with a sufficient amount of water, part of the food grade acids and part of the coloring agents to obtain fully hydrated TVP

b) Part of the hydrated TVP was ground by extruding it through a plate with holes (8 mm diameter) into strands having a length of 1-2 cm

c) The ground TVP was mixed with the remaining unground hydrated TVP under low speed

d) Palmfat flakes were admixed under low speed

e) The remainder of the water, methylcellulose, potato protein, remainder of the food grade acids, flavouring and liquid oil was admixed under low speed for 20-25 min to obtain the meat analogue mixture

f) The meat analogue mixture was formed into hamburger patties with a diameter of about 8.6 cm and thickness of about 1.9 cm.

g) The meat analogue was packaged under a modified atmosphere and stored at 4°C During the process the temperature of the mixture and meat analogue was kept below 10°C.

The hamburger patties were tested directly after production (reference) and after 28 days storage.

Table 2

| | NaCl (wt %) | Moisture content (wt%) | pH | Aw | Acetic acid (mg/kg) | Citric acid (mg/kg) | Malic Acid (mg/kg) | Undissociated Acetic Acid (wt%) | Undissociated Acid (wt%) |
|---|---|---|---|---|---|---|---|---|---|
| A | 1,3 | 63,9 | 5,4 | 0,98 | 3620 | 2120 | 1620 | 0,104 | 0,114 |
| B | 1,28 | 63,3 | 5,4 | 0,98 | 3430 | 2170 | 1920 | 0,099 | 0,110 |
| C | 1,24 | 62,5 | 5,5 | 0,98 | 3510 | 1930 | 1770 | 0,085 | 0,093 |
| D | 0,65 | 56 | 5,4 | 1 | 2800 | 2000 | NA | 0,092 | NA |
| COMP A | 0,65 | 56 | 5,3 | 0,98 | 100 | 1310 | NA | 0,004 | NA |

Example 2 Sensory tests comparing day 0 (directly after production) to samples after 28 days storage

Blind sensory evaluation was performed by a panel with 4-9 panellists. Samples of example 1, Table 2 were assessed raw, prepared by a chef in a kitchen, and tasted individually. The assessment took place using a sensory scoring sheet (1-5) with the following scoring

5 assessed as identical to reference

4 small difference acceptable

3 noticeable differences acceptable

2 significant differences not acceptable

1 major differences not acceptable.

| Example | Mouthfeel/ juiciness | Taste | Aftertaste | General score |
|---|---|---|---|---|
| A | 4,5 | 4 | 4,25 | acceptable |
| B | 4 | 4 | 4 | acceptable |
| C | 5 | 4 | 4 | acceptable |
| D | 4,5 | 3,25 | 3,5 | acceptable |
| Comp A | 2,43 | 2 | 2 | not acceptable |

Products stored for 28 days at 7°C of which the last 1/3 part stored at 12°C showed excellent product stability for the inventive composition.

Example 3 Comparative examples of meat analogue not according to the invention

| | NaCl (wt%) | Moisture content (wt%) | pH | Aw | Acetic acid (mg/kg) | Citric acid (mg/kg) | Lactic Acid (mg/kg) | Undissociated Acetic Acid (wt%) | Undissociated Acid (wt%) |
|---|---|---|---|---|---|---|---|---|---|
| Comp B | 1,30 | 61,40 | 6,00 | 0,98 | 100 | 2800 | 2400 | 0,000867 | 0,005 |
| Comp C | 1,50 | 65,1 | 5,40 | 0,97 | 100 | 1810 | 590 | 0,00281 | 0,011 |
| Comp D | 1,10 | 66,90 | 6,39 | 0,97 | 104 | 250 | 100 | 0,000348 | 0,000 |
| Comp E | 1,60 | 53,4 | 6,33 | 0,97 | 100 | 187 | 2200 | 0,00048 | 0,001 |
| Comp F | <0,03 | 59,1 | 6,80 | 0,99 | 390 | 40 | 7100 | 0,000583 | 0,001 |

Example 4 Examples according to the invention

| | NaCl (wt%) | Moisture content (wt%) | pH | Aw | Acetic acid (mg/kg) | Citric acid (mg/kg) | Malic Acid (mg/kg) | Undissociated Acetic Acid (wt%) | Undissociated Acid (wt%) |
|---|---|---|---|---|---|---|---|---|---|
| E | 2,3 | 68 | 5,3 | 0,98 | 1370 | 9560 | 495 | 0,042 | 0,089 |
| F | 1,3 | 63 | 5,3 | 0,99 | 1090 | 144 | 954 | 0,041 | 0,043 |
| G | 1,4 | 64 | 5,0 | 0,99 | 1050 | 67 | 1220 | 0,064 | 0,067 |
| H | 0,9 | 48 | 5,1 | 0,98 | 1480 | 1910 | 276 | 0,091 | 0,112 |

E= meat analogue cold cut
F and G = meat analogue sausages (pasteurised)
H= breaded meat analogue

## Claims

1. A meat analogue comprising, by weight of the total composition, unless indicated otherwise,

   a) non-animal protein
   b) a binding agent, preferably comprising at least one ungelatinized gel forming agent,
   c) a food grade acid in the form of an edible organic acid, such that the level of undissociated acid is from 0.015 to 0.5 wt%, preferably whereby said food grade acid comprises acetic acid, citric acid, lactic acid, malic acid and combinations thereof
   d) preferably 0.01 to 5 wt% of NaCl, more preferably 0.05 to 3 wt% of NaCl more preferably 0.1 to 2 wt% of NaCl, more preferably 0.3 to 1.7wt%, more preferably 0.5 to 1.7wt%, more preferably 1.1 to 1.5 wt% NaCl
   Whereby said meat analogue has a

      i) pH from 4.7 to 6.0

ii) water activity (Aw) from 0.96 to 1

iii) a moisture content of from 45 to 69 wt%

Whereby the meat analogue contains no egg white protein.

2. A meat analogue according to claim 1 whereby the meat analogue is substantially free from animal protein.

3. A meat analogue according to any one of the preceding claims wherein the undissociated acid level is from 0.05 to 0.2 wt%, and the amount of NaCl is from 0.3 to 1.7wt%, NaCl by weight of the total composition.

4. A meat analogue according to any one of the preceding claims wherein moisture content is 56 to 65 wt % by weight of the total composition.

5. A meat analogue according to any one of the preceding claims wherein the meat analogue has a pH of 5.1-5.9 by weight of the total composition.

6. A meat analogue according to any one of the preceding claims wherein the meat analogue is a minced meat analogue.

7. A meat analogue according to any one of the preceding claims wherein the meat analogue has an undissociated acetic acid level from 0.015 to 0.5 wt%, preferably from 0.05 to 0.2 wt%, more preferably from 0.075 to 0.2wt %, even more preferably from 0.080 to 0.15 wt%, even more preferably from 0.080 to 0.13 wt % by weight of the total composition.

8. A meat analogue according to any one of the preceding claims wherein the meat analogue is a minced-meat analogue and whereby

• the undissociated acid level is from 0.075 to 0.2wt %, more preferably from 0.080 to 0.15 wt%, even more preferably from 0.080 to 0.13 wt %
• the amount of NaCl is from 0.5 to 1.7wt%, more preferably 1.1 to 1.5 wt% NaCl
• the pH is from 5.1-5.9, more preferably 5.2 to 5.6
• the water activity (Aw) is from 0.96 to 1, more preferably 0.97 to 1
• the moisture content of from 56 to 65 wt % even more preferably 60 to 65wt %

9. A meat analogue according to any one of the preceding claims wherein the amount of food grade acid is of from 0.15 to 4 wt%, preferably from 0.20 to 2.5 wt%, more preferably from 0.25 to 1 wt % by weight of the total composition.

10. A minced meat analogue in the form of a burger or sausage according to any one of the preceding claims comprising in wt% by weight of the total composition:

a) non-animal protein present as 40 to 60 wt% of hydrated textured vegetable protein particles resulting in the meat analogue having 7 to 24 wt% of plant protein by weight of the total composition
b) a binding agent, preferably comprising at least one ungelatinized gel forming agent,
c) acetic acid, citric acid, malic acid and combinations thereof
d) an undissociated acetic acid level from 0.080 to 0.13 wt %
e) 0.5 to 1.7wt%, more preferably 1.1 to 1.5 wt% NaCl
f) 8 to 20 wt% of lipid
Whereby said meat analogue has a

i. pH from 5.2 to 5.6
ii. Aw 0.97 to 1
iii. a moisture content of from 56 to 65 wt % even more preferably 60 to 65wt % Whereby the meat analogue contains no egg white protein, preferably no animal protein,

Whereby the meat analogue is packaged under modified atmosphere.

11. A process for preparing a meat analogue according to any one of the preceding claims whereby textured protein (TP) provides at least part of the non-animal protein comprising the steps of

a) Hydrating dry TP particles to obtain hydrated TP
b) Optionally grinding part of the hydrated TP into strands having a length of 1-2 cm
c) Optionally mixing the ground TP with the remaining unground hydrated TVP
d) Admixing the remainder of the ingredients to obtain the meat analogue mixture
e) Optionally forming the meat analogue mixture into the final form of the meat analogue like a burger, sausage or meat ball.
f) Optionally packaging the meat analogue, preferably under a modified atmosphere.

Whereby the during the process the temperature of the mixture and meat analogue is kept below 20°C, preferably below 15°C, more preferably below 10°C.

12. A process for preparing a meat analogue according to the preceding process claim whereby the meat analogue comprises both liquid oil droplet and solid fat particles and whereby the liquid oil and solid fat are mixed separately.

13. A process for preparing a meat analogue according to any one of the preceding process claims whereby the meat analogue further comprises coloring agents and the hydration of the TP is carried out with at least part of the food grade acids and, part of the coloring agents.

14. A process for preparing a meat analogue according to the preceding process claim whereby the amount of food grade acids and coloring agent used in the hydration step is calculated to obtain an even distribution of the food grade acids and coloring agent throughout the TP particles and the meat analogue.

15. A process for preparing a meat analogue according to any one of the preceding process claims whereby the meat analogue is packaged under a modified atmosphere said modified atmosphere atmosphere is one from which oxygen is substantially depleted, or increased to more than 30vol%.

**Patentansprüche**

1. Fleischanalogon, umfassend, bezogen auf das Gewicht der Gesamtzusammensetzung, wenn nicht anders angegeben,

a) nicht-tierisches Protein,
b) ein Bindemittel, vorzugsweise umfassend mindestens ein ungelatiniertes Gelbildungsmittel,
c) eine Säure von Lebensmittelqualität in Form einer essbaren organischen Säure derart, dass der Gehalt an undissoziierter Säure 0,015 bis 0,5 Gew.-% beträgt, wobei die Säure von Lebensmittelqualität bevorzugt Essigsäure, Zitronensäure, Milchsäure, Apfelsäure und Kombinationen davon umfasst,
d) bevorzugt 0,01 bis 5 Gew.-% NaCl, bevorzugter 0,05 bis 3 Gew.-% NaCl, bevorzugter 0,1 bis 2 Gew.-% NaCl, bevorzugter 0,3 bis 1,7 Gew.-%, bevorzugter 0,5 bis 1,7 Gew.-&, bevorzugter 1,1 bis 1,5 Gew.-% NaCl.
wobei das Fleischanalogon

i) einen pH-Wert von 4,7 bis 6,0,
ii) eine Wasseraktivität (Aw) von 0,96 bis 1,
iii) einen Feuchtigkeitsgehalt von 45 bis 69 Gew.-%

aufweist,
wobei das Fleischanalogon kein Eiweißprotein enthält.

2. Fleischanalogon nach Anspruch 1, wobei das Fleischanalogon im Wesentlichen frei von tierischem Protein ist.

3. Fleischanalogon nach irgendeinem der vorhergehenden Ansprüche, wobei der Gehalt an undissoziierter Säure 0,05 bis 0,2 Gew.-% und die Menge an NaCl 0,3 bis 1,7 Gew.-%, NaCl bezogen auf das Gewicht der Gesamtzusammensetzung, beträgt.

4. Fleischanalogon nach irgendeinem der vorhergehenden Ansprüche, wobei der Feuchtigkeitsgehalt 56 bis 65 Gew.-%, bezogen auf das Gewicht der Gesamtzusammensetzung, beträgt.

5. Fleischanalogon nach irgendeinem der vorhergehenden Ansprüche, wobei das Fleischanalogon einen pH-Wert von 5,1-5,9, bezogen auf das Gewicht der Gesamtzusammensetzung, aufweist.

6. Fleischanalogon nach irgendeinem der vorhergehenden Ansprüche, wobei das Fleischanalogon ein Hackfleischanalogon ist.

7. Fleischanalogon nach irgendeinem der vorhergehenden Ansprüche, wobei das Fleischanalogon einen Gehalt an undissoziierter Essigsäure von 0,015 bis 0,5 Gew.-%, bevorzugt von 0,05 bis 0,2 Gew.-%, bevorzugter von 0,075 bis 0,2 Gew.-%, noch bevorzugter von 0,080 bis 0,15 Gew.-%, noch bevorzugter von 0,080 bis 0,13 Gew.-%, bezogen auf das Gewicht der Gesamtzusammensetzung, aufweist.

8. Fleischanalogon nach irgendeinem der vorhergehenden Ansprüche, wobei das Fleischanalogon ein Hackfleischanalogon ist und wobei

• der Gehalt an undissoziierter Säure 0,075 bis 0,2 Gew.-%, bevorzugter 0,080 bis 0,15 Gew.-%, noch bevorzugter 0,080 bis 0,13 Gew.-% beträgt,
• die Menge an NaCl 0,5 bis 1,7 Gew.-%, bevorzugter 1,1 bis 1,5 Gew.-% NaCl beträgt,
• der pH-Wert 5,1-5,9, bevorzugter 5,2 bis 5,6, beträgt,
• die Wasseraktivität (Aw) 0,96 bis 1, bevorzugter 0,97 bis 1 beträgt,
• der Feuchtigkeitsgehalt 56 bis 65 Gew.-%, noch bevorzugter 60 bis 65 Gew.-%,

beträgt.

9. Fleischanalogon nach irgendeinem der vorhergehenden Ansprüche, wobei die Menge an Säure von Lebensmittelqualität 0,15 bis 4 Gew.-%, bevorzugt 0,20 bis 2,5 Gew.-%, bevorzugter 0,25 bis 1 Gew.-%, bezogen auf das Gewicht der Gesamtzusammensetzung, beträgt.

10. Hackfleischanalogon in Form eines Burgers oder einer Wurst nach irgendeinem der vorhergehenden Ansprüche, umfassend in Gew.-%, bezogen auf das Gewicht der Gesamtzusammensetzung:

a) nicht-tierisches Protein, das in Form von 40 bis 60 Gew.-% hydratisierter texturierter pflanzlicher Proteinpartikel vorliegt, was dazu führt, dass das Fleischanalogon 7 bis 24 Gew.-% pflanzliches Protein, bezogen auf das Gewicht der Gesamtzusammensetzung, aufweist,
b) ein Bindemittel, das bevorzugt mindestens ein ungelatiniertes Gelbildungsmittel umfasst,
c) Essigsäure, Zitronensäure, Apfelsäure und Kombinationen davon,
d) einen Gehalt an undissoziierter Essigsäure von 0,080 bis 0,13 Gew.-%,
e) 0,5 bis 1,7 Gew.-%, bevorzugter 1,1 bis 1,5 Gew.-% NaCl,
f) 8 bis 20 Gew.-% Lipid,
wobei das Fleischanalogon

i. einen pH-Wert von 5,2 bis 5,6,
ii. einen Aw-Wert von 0,97 bis 1,
iii. einen Feuchtigkeitsgehalt von 56 bis 65 Gew.-%, noch bevorzugter von 60 bis 65 Gew.-%,

aufweist,
wobei das Fleischanalogon kein Eiweißprotein, bevorzugt kein tierisches Protein, enthält,
wobei das Fleischanalogon unter Schutzgas verpackt wird.

11. Verfahren zur Herstellung eines Fleischanalogons nach irgendeinem der vorhergehenden Ansprüche, wobei texturiertes Protein (TP) zumindest einen Teil des nicht-tierischen Proteins bereitstellt, umfassend die Schritte

a) Hydratisieren trockener TP-Partikel, um hydratisiertes TP zu erhalten,
b) optional Mahlen eines Teils des hydratisierten TP zu Strängen einer Länge von 1-2 cm,
c) optional Mischen des gemahlenen TP mit dem verbleibenden ungemahlenen hydratisierten TP,
d) Beimischen der restlichen Zutaten, um die Fleischanalogonmischung zu erhalten,
e) optional Formen der Fleischanalogonmischung in die endgültige Form des Fleischanalogons, wie eines Burgers, einer Wurst oder eines Fleischbällchens,
f) optional Verpacken des Fleischanalogons, vorzugsweise unter Schutzatmosphäre,

wobei während des Verfahrens die Temperatur der Mischung und des Fleischanalogons unter 20°C, bevorzugt unter 15 °C, bevorzugter unter 10°C, gehalten wird.

12. Verfahren zur Herstellung eines Fleischanalogons nach dem vorhergehenden Verfahrensanspruch, wobei das Fleischanalogon sowohl flüssige Öltröpfchen als auch feste Fettpartikel umfasst und wobei das flüssige Öl und das feste Fett getrennt gemischt werden.

13. Verfahren zur Herstellung eines Fleischanalogons nach irgendeinem der vorhergehenden Verfahrensansprüche, wobei das Fleischanalogon außerdem Farbmittel enthält und das Hydratisieren des TP mit zumindest einem Teil der Säuren von Lebensmittelqualität und einem Teil der Farbmittel durchgeführt wird.

14. Verfahren zur Herstellung eines Fleischanalogons nach dem vorhergehenden Verfahrensanspruch, wobei die Menge der Säuren von Lebensmittelqualität und des Farbmittels, verwendet in dem Hydratisierungsschritt, so berechnet wird, dass hierdurch eine gleichmäßige Verteilung der Säuren von Lebensmittelqualität und des Farbmittels in den TP-Partikeln und in dem Fleischanalogon erreicht wird.

15. Verfahren zur Herstellung eines Fleischanalogons nach irgendeinem der vorhergehenden Verfahrensansprüche, wobei das Fleischanalogon unter einer Schutzatmosphäre verpackt wird, wobei es sich bei der Schutzatmosphäre um eine Atmosphäre handelt, in der der Sauerstoff wesentlich verarmt oder auf über 30 Vol-% erhöht ist.

**Revendications**

1. Analogue de viande comprenant, en poids de la composition totale, sauf indication contraire,

   a) des protéines non animales
   b) un agent liant, comprenant de préférence au moins un agent gélifiant non gélatinisé,
   c) un acide de qualité alimentaire sous la forme d'un acide organique comestible, de sorte que le taux d'acide non dissocié soit de 0,015 à 0,5 % en poids, ledit acide de qualité alimentaire comprenant de préférence de l'acide acétique, de l'acide citrique, de l'acide lactique, de l'acide malique et des combinaisons de ceux-ci
   d) de préférence 0,01 à 5 % en poids de NaCl, plus préférablement 0,05 à 3 % en poids de NaCl, plus préférablement 0,1 à 2 % en poids de NaCl, plus préférablement 0,3 à 1,7 % en poids, plus préférablement 0,5 à 1,7 % en poids, plus préférablement 1,1 à 1,5 % en poids de NaCl
   ledit analogue de viande ayant

      i) un pH de 4,7 à 6,0
      ii) une activité de l'eau (Aw) de 0,96 à 1
      iii) une teneur en humidité de 45 à 69 % en poids

   l'analogue de viande ne contenant pas de protéines de blanc d'oeuf.

2. Analogue de viande selon la revendication 1, l'analogue de viande étant sensiblement exempt de protéines animales.

3. Analogue de viande selon l'une quelconque des revendications précédentes, dans lequel le taux d'acide non dissocié est de 0,05 à 0,2 % en poids et la quantité de NaCl est de 0,3 à 1,7 % en poids de NaCl en poids de la composition totale.

4. Analogue de viande selon l'une quelconque des revendications précédentes, dans lequel la teneur en humidité est de 56 à 65 % en poids de la composition totale.

5. Analogue de viande selon l'une quelconque des revendications précédentes, l'analogue de viande ayant un pH de 5,1 à 5,9 en poids de la composition totale.

6. Analogue de viande selon l'une quelconque des revendications précédentes, l'analogue de viande étant un analogue de viande hachée.

7. Analogue de viande selon l'une quelconque des revendications précédentes, l'analogue de viande ayant un taux d'acide acétique non dissocié de 0,015 à 0,5 % en poids, de préférence de 0,05 à 0,2 % en poids, plus préférablement de 0,075 à 0,2 % en poids, encore plus préférablement de 0,080 à 0,15 % en poids, encore plus préférablement de 0,080 à 0,13 % en poids de la composition totale.

8. Analogue de viande selon l'une quelconque des revendications précédentes, l'analogue de viande étant un analogue de viande hachée et dans lequel

   • le taux d'acide non dissocié est de 0,075 à 0,2 % en poids, plus préférablement de 0,080 à 0,15 % en poids, encore plus préférablement de 0,080 à 0,13 % en poids
   • la quantité de NaCl est de 0,5 à 1,7 % en poids, de préférence de 1,1 à 1,5 % en poids de NaCl
   • le pH est de 5,1 à 5,9, de préférence de 5,2 à 5,6
   • l'activité de l'eau (Aw) est de 0,96 à 1, plus préférablement de 0,97 à 1
   • la teneur en humidité de 56 à 65 % en poids, encore plus préférablement de 60 à 65 % en poids.

9. Analogue de viande selon l'une quelconque des revendications précédentes, dans lequel la quantité d'acide de qualité alimentaire est de 0,15 à 4 % en poids, de préférence de 0,20 à 2,5 % en poids, plus préférablement de 0,25 à 1 % en poids de la composition totale.

10. Analogue de viande hachée sous la forme de hamburger ou de saucisse selon l'une quelconque des revendications précédentes comprenant, en % en poids de la composition totale :

    a) des protéines non animales présentes sous la forme de 40 à 60 % en poids de particules de protéines végétales texturées hydratées, ce qui conduit à ce que l'analogue de viande contienne de 7 à 24 % en poids de protéines végétales en poids de la composition totale
    b) un agent liant, comprenant de préférence au moins un agent gélifiant non gélatinisé,
    c) de l'acide acétique, de l'acide citrique, de l'acide malique et des combinaisons de ceux-ci
    d) un taux d'acide acétique non dissocié de 0,080 à 0,13 % en poids
    e) 0,5 à 1,7 % en poids, de préférence 1,1 à 1,5 % en poids de NaCl
    f) 8 à 20 % en poids de lipides
    ledit analogue de viande ayant

       i. un pH de 5,2 à 5,6
       ii. une Aw de 0,97 à 1
       iii. une teneur en humidité de 56 à 65 % en poids, encore plus préférablement de 60 à 65 % en poids

    l'analogue de viande ne contenant pas de protéines de blanc d'oeuf, de préférence pas de protéines animales, l'analogue de viande étant conditionné sous une atmosphère modifiée.

11. Procédé de préparation d'un analogue de viande selon l'une quelconque des revendications précédentes, dans lequel les protéines texturées (TP) fournissent au moins une partie des protéines non animales, comprenant les étapes de

    a) hydratation des particules sèches de TP pour obtenir des TP hydratées
    b) broyage facultatif d'une partie des TP hydratées en brins ayant une longueur de 1 à 2 cm
    c) mélange facultatif des TP broyées avec les TVP hydratées non broyées restantes
    d) mélange du reste des ingrédients pour obtenir le mélange d'analogue de viande
    e) façonnage facultatif du mélange d'analogue de viande pour lui donner la forme finale de l'analogue de viande, telle qu'un hamburger, une saucisse ou une boulette de viande
    f) conditionnement facultatif de l'analogue de viande, de préférence sous une atmosphère modifiée,

    de sorte que pendant le procédé, la température du mélange et de l'analogue de viande soit maintenue au-dessous de 20 °C, de préférence au-dessous de 15 °C, plus préférablement au-dessous de 10 °C.

12. Procédé de préparation d'un analogue de viande selon la revendication de procédé précédente, dans lequel l'analogue de viande comprend à la fois des gouttelettes d'huile liquide et des particules de graisse solide et dans lequel l'huile liquide et la graisse solide sont mélangées séparément.

13. Procédé de préparation d'un analogue de viande selon l'une quelconque des revendications de procédé précédentes, dans lequel l'analogue de viande comprend en outre des agents colorants et l'hydratation des TP est réalisée avec au moins une partie des acides de qualité alimentaire et une partie des agents colorants.

**14.** Procédé de préparation d'un analogue de viande selon la revendication de procédé précédente, dans lequel la quantité d'acides de qualité alimentaire et d'agent colorant utilisée dans l'étape d'hydratation est calculée de façon à obtenir une distribution uniforme des acides de qualité alimentaire et de l'agent colorant dans les particules de TP et l'analogue de viande.

**15.** Procédé de préparation d'un analogue de viande selon l'une quelconque des revendications de procédé précédentes, dans lequel l'analogue de viande est conditionné sous une atmosphère modifiée, ladite atmosphère modifiée étant une atmosphère dans laquelle l'oxygène est sensiblement réduit, ou augmenté à plus de 30 % en volume.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008260913 A1
- EP 0296963 A2
- US 2682466 A, Boyer
- US 3314356 A